(19) Europäisches Patentamt
European Patent Office
Office européen des brevets

(11)  **EP 3 153 369 A1**

(12)  **DEMANDE DE BREVET EUROPEEN**

(43) Date de publication:
**12.04.2017   Bulletin 2017/15**

(51) Int Cl.:
**B60W 20/13** *(2016.01)*      **B60W 10/06** *(2006.01)*
**B60W 10/08** *(2006.01)*      **B60W 10/26** *(2006.01)*
**B60L 11/18** *(2006.01)*

(21) Numéro de dépôt: **16306285.4**

(22) Date de dépôt: **30.09.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité:  **05.10.2015   FR 1559483**

(71) Demandeur: **Renault S.A.S.
92100 Boulogne-Billancourt (FR)**

(72) Inventeurs:
• **SAINT-MARCOUX, Antoine
91120 PALAISEAU (FR)**
• **DELOBEL, Bruno
92130 Issy-Les-Moulineaux (FR)**
• **DRIEMEYER-FRANCO, Ana-Lucia
78180 MONTIGNY LE BRETONNEUX (FR)**
• **GOHIER, Aurélien
92160 ANTONY (FR)**

(54)  **PROCEDE DE DETERMINATION DES PLAGES D'UTILISATION D'UNE BATTERIE DE TRACTION**

(57)   L'invention concerne un procédé de détermination de plages d'utilisation d'une batterie de traction d'un véhicule automobile hybride comportant un moteur électrique alimenté en courant électrique par la batterie de traction, et un moteur à combustion interne alimenté en carburant, comportant des étapes consistant à :
- définir la borne inférieure (BSOC_Min_CD) et la borne supérieure (BSOC_Max_CD) d'une première plage d'utilisation de la batterie de traction lorsque le véhicule est propulsé en utilisant exclusivement le moteur électrique, et
- définir la borne inférieure (BSOC_Min_CS) et la borne supérieure (BSOC_Max_CS) d'une seconde plage d'utilisation de la batterie de traction lorsque le véhicule est propulsé en utilisant en combinaison le moteur électrique et le moteur à combustion interne.

Selon l'invention, au moins une des bornes inférieure (BSOC_Min_CS) et supérieure (BSOC_MAx_CS) de la seconde plage d'utilisation est définie en fonction d'une température de référence qui est relative à la température extérieure au véhicule automobile et la borne inférieure (BSOC_Min_CD) ainsi que la borne supérieure (BSOC_Max_CD) de la première plage d'utilisation de la batterie de traction ne varient pas en fonction de la température extérieure au véhicule automobile.

## Fig.2

**Description**

DOMAINE TECHNIQUE AUQUEL SE RAPPORTE L'INVENTION

La présente invention concerne de manière générale le domaine des véhicules hybrides rechargeables, c'est-à-dire des véhicules comportant un moteur électrique alimenté en courant électrique par une batterie de traction, et un moteur à combustion interne alimenté en carburant par un réservoir de carburant, via un circuit d'alimentation.

L'invention concerne plus particulièrement un procédé de gestion de l'énergie dans une batterie de traction d'un tel véhicule automobile hybride, incluant les étapes suivantes :

- définir la borne inférieure et la borne supérieure d'une première plage d'utilisation de la batterie de traction lorsque le véhicule est propulsé en utilisant exclusivement le moteur électrique, et
- définir la borne inférieure et la borne supérieure d'une seconde plage d'utilisation de la batterie de traction lorsque le véhicule est propulsé en utilisant en combinaison le moteur électrique et le moteur à combustion interne.

L'invention trouve une application particulièrement avantageuse dans les véhicules hybrides à grande autonomie électrique, c'est-à-dire dans les véhicules susceptibles de rouler à l'aide de leur seul moteur électrique sur une distance supérieure à 10 kilomètres.

ARRIERE-PLAN TECHNOLOGIQUE

Un véhicule hybride rechargeable comporte une chaîne de traction thermique conventionnelle (avec un moteur à combustion interne et un réservoir de carburant) et une chaîne de traction électrique (avec un moteur électrique et une batterie de traction pouvant notamment être mise en charge sur une prise de courant).

Un tel véhicule hybride est susceptible d'être tracté par sa seule chaîne de traction électrique, ou simultanément par ses deux chaînes de traction électrique et thermique.

La stratégie généralement usitée consiste à systématiquement commencer par utiliser la seule chaîne de traction électrique au début du trajet jusqu'à atteindre un niveau d'énergie seuil (on parle de « mode tout-électrique » ou mode « CD » selon la terminologie anglosaxonne « Charge Depleting »), puis à utiliser ensuite les deux chaînes de traction en combinaison (on parle de « mode hybride » ou mode « CS » selon la terminologie anglosaxonne « Charge Sustaining ») de manière à maintenir, grâce à la puissance développée par le moteur à combustion interne, un niveau de charge suffisant dans la batterie de traction.

De cette manière, lorsque le conducteur réalise des trajets courts et qu'il a régulièrement la possibilité de recharger la batterie de traction, il utilise au maximum la chaîne de traction électrique, ce qui réduit les émissions polluantes du véhicule.

La batterie de traction présente une plage d'utilisation qui est restreinte par rapport à l'ensemble de la plage qui pourrait théoriquement être utilisée. A titre d'exemple, il n'est pas souhaitable, sauf à détériorer la batterie de traction, de la décharger complètement.

La détermination de cette plage d'utilisation résulte d'un compromis entre l'énergie totale que l'on souhaite rendre disponible (on souhaite maximiser la borne supérieure et minimiser la borne inférieure de cette plage), la durée de vie espérée de la batterie (il faut alors minimiser la borne supérieure pour optimiser cette durée de vie), et la puissance électrique que l'on souhaite que la batterie puisse développer (il faut alors augmenter la borne inférieure pour que cette puissance électrique disponible reste supérieure à un seuil).

A l'intérieur de cette plage d'utilisation globale, on distingue deux plages, à savoir une première plage d'utilisation de la batterie lorsque le véhicule est utilisé en mode tout-électrique et une seconde plage d'utilisation de la batterie lorsque le véhicule est utilisé en mode hybride.

Le positionnement de ces deux plages d'utilisation dans la plage d'utilisation globale se fait de manière à minimiser la consommation en carburant du véhicule. En pratique, on souhaite ainsi maximiser l'autonomie du véhicule en mode tout-électrique tout en s'assurant que, lorsque le véhicule passe en mode hybride, la puissance électrique disponible dans la batterie reste suffisante pour que la batterie puisse assurer les fonctions qui lui sont assignées.

Le document US20110166733A1 propose une solution pour positionner ces deux plages, en fonction notamment de l'état de vieillissement de la batterie de traction.

Une autre solution consiste à positionner ces deux plages de telle manière que les bornes supérieures de la plage d'utilisation globale et de la plage d'utilisation en mode tout-électrique se confondent ; que les bornes inférieures de la plage d'utilisation globale et de la plage d'utilisation en mode hybride se confondent ; et que la borne inférieure de la plage d'utilisation en mode tout-électrique se positionne au centre de la plage d'utilisation en mode hybride.

Ces deux solutions sont satisfaisantes tant que les conditions de fonctionnement des deux chaînes de traction ne varient pas, et notamment tant que la température de la batterie de traction reste constante.

La demanderesse a toutefois constaté que ces solutions ne fonctionnent plus dans un cas de figure bien particulier, à savoir suite à un arrêt prolongé du véhicule alors que la température extérieure est basse et que le niveau de charge de la batterie est faible. Dans ce cas de figure, la température de la batterie de traction peut chuter drastiquement pendant l'arrêt du véhicule. C'est la raison pour laquelle, lors du redémarrage du véhicule, la puissance électrique disponible dans la batterie de traction est insuffisante (cette puissance est en effet fonction de la température de la batterie).

Pour éviter de rencontrer un tel problème, une solution consiste à augmenter la borne inférieure de la plage d'utilisation globale (et donc de la plage d'utilisation en mode hybride) afin de conserver un niveau de puissance électrique suffisant, quelles que soient les variations de température de la batterie de traction.

L'inconvénient majeur de cette solution est qu'elle s'avère pénalisante en termes d'autonomie de la batterie de traction, puisque cela revient à interdire d'utiliser la batterie dans une partie de sa plage de fonctionnement. Cette solution nécessite donc de surdimensionner la batterie de traction pour assurer les performances requises, alors même que le problème de température précité ne se pose que rarement.

OBJET DE L'INVENTION

Afin de remédier à l'inconvénient précité de l'état de la technique, la présente invention propose une solution permettant d'assurer que la puissance électrique disponible dans la batterie de traction reste toujours supérieure à un niveau requis, y compris suite à une longue pause du véhicule dans une ambiance froide, et ne nécessitant pas de surdimensionner la batterie de traction.

Plus particulièrement, on propose selon l'invention un procédé tel que défini dans l'introduction, dans lequel au moins une des bornes inférieure et supérieure de la seconde plage d'utilisation est définie en fonction d'une température de référence qui est relative à la température extérieure au véhicule automobile et dans lequel la borne inférieure ainsi que la borne supérieure de la première plage d'utilisation de la batterie de traction ne varient pas en fonction de la température extérieure au véhicule automobile.

Ainsi, grâce à l'invention, la seconde plage d'utilisation peut être décalée uniquement lorsqu'il existe un risque que la température de la batterie chute drastiquement en cas d'arrêt du véhicule. De cette manière, dans ce cas bien précis, on s'assure que la puissance électrique disponible dans la batterie de traction reste supérieure au seuil requis.

En d'autres termes, la solution selon l'invention consiste à réduire la plage d'utilisation de la batterie de traction uniquement dans le cas bien particulier où la température extérieure est basse, de manière à ce que la batterie puisse conserver un niveau de prestations suffisant.

D'autres caractéristiques avantageuses et non limitatives du procédé conforme à l'invention sont les suivantes :

- la borne inférieure de la seconde plage d'utilisation est déterminée de manière que la batterie de traction puisse instantanément développer une puissance électrique supérieure à un premier seuil prédéterminé ;
- la borne inférieure de la seconde plage d'utilisation est déterminée de manière que la batterie de traction puisse développer une puissance électrique supérieure à un second seuil prédéterminé après que sa température interne a chuté, ledit second seuil étant strictement inférieur audit premier seuil ;
- ladite température de référence est égale à la température extérieure au véhicule automobile ;
- ladite température de référence est égale à la température interne de la batterie de traction soustraite d'une constante prédéterminée ;
- ladite température de référence est fonction de la température extérieure au véhicule et de la température interne de la batterie de traction ;
- les première et seconde plages d'utilisation étant contenues dans une plage d'utilisation globale, la borne inférieure de la plage d'utilisation globale est définie en fonction d'un état de vieillissement de la batterie de traction ; et
- les première et seconde plages d'utilisation étant contenues dans une plage d'utilisation globale, la borne supérieure de la plage d'utilisation globale est définie en fonction d'un état de vieillissement de la batterie de traction.

L'invention propose également un procédé de calcul d'une consigne de gestion de la consommation en carburant et en courant électrique d'un véhicule automobile hybride comprenant des étapes consistant à :

- calculer chaque plage d'utilisation de la batterie de traction au moyen d'un procédé de calcul tel que précité, et
- déterminer ladite consigne de gestion de telle manière que le niveau de charge de la batterie de traction reste compris entre la borne inférieure et la borne supérieure de la première plage d'utilisation de la batterie de traction lorsque le véhicule automobile est propulsé en utilisant exclusivement le moteur électrique, et qu'il reste compris entre la borne inférieure et la borne supérieure de la seconde plage d'utilisation de la batterie de traction lorsque le véhicule automobile est propulsé en utilisant en combinaison le moteur électrique et le moteur à combustion interne.

Préférentiellement alors, lorsque le véhicule automobile est propulsé en utilisant en combinaison le moteur électrique et le moteur à combustion interne, ladite consigne de gestion est déterminée de manière à minimiser un vecteur (par exemple un Hamiltonien) prenant en compte un terme relatif à la consommation en carburant du moteur à combustion interne et un terme relatif à une cible d'état de charge de la batterie de traction, cette cible d'état de charge étant fonction de la borne inférieure et de la borne supérieure de la seconde plage d'utilisation.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 est un graphique illustrant les plages de fonctionnement d'une batterie de traction, lorsque la température extérieure est égale à 25°C ;
- la figure 2 est un graphique illustrant le décalage de l'une des plages de fonctionnement de la batterie de traction de la figure 1, lorsque la température extérieure est égale à -10°C ;
- la figure 3 est un graphique illustrant les variations de la puissance électrique disponible dans la batterie de traction de la figure 1, en fonction de l'état de charge de cette batterie de traction, lorsque la température extérieure est égale à 25°C ;
- la figure 4 est un graphique illustrant les variations de la puissance électrique disponible dans la batterie de traction de la figure 1, en fonction de l'état de charge de cette batterie de traction, lorsque la température extérieure est égale à -10°C ;
- la figure 5 est un graphique illustrant les variations de l'état de charge de la batterie de traction de la figure 1 en fonction du temps sur un cycle complet de fonctionnement du véhicule, dans le cas où la température extérieure est de 25°C et dans le cas où la température extérieure est de -10°C ;
- la figure 6 est un graphique illustrant les variations d'une fonction de coût, en fonction de l'état de charge de la batterie de traction de la figure 1.

En préliminaire, on notera qu'une « plage d'utilisation d'une batterie de traction » désignera un intervalle entre deux états de charge de cette batterie, ou encore entre deux « BSOC » (selon la terminologie anglo-saxonne signifiant « Battery State Of Charge »).
Classiquement, un véhicule automobile comporte un châssis qui supporte notamment un groupe motopropulseur, des éléments de carrosserie et des éléments d'habitacle.
Dans un véhicule hybride rechargeable, le groupe motopropulseur comporte une chaîne de traction thermique et une chaîne de traction électrique.
La chaîne de traction thermique comporte notamment un réservoir de carburant, un circuit d'alimentation en carburant qui prend naissance dans le réservoir, et un moteur à combustion interne alimenté en carburant par le circuit d'alimentation.
La chaîne de traction électrique comporte quant à elle une batterie de traction et un ou plusieurs moteur(s) électrique(s) alimenté(s) en courant électrique par la batterie de traction.
Un tel véhicule hybride est susceptible d'être tracté par sa seule chaîne de traction électrique (en mode tout-électrique ou « mode CD »), ou simultanément par ses deux chaînes de traction électrique et thermique (en mode hybride ou « mode CS »). En mode tout-électrique, le moteur à combustion interne est à l'arrêt. En mode hybride, le moteur électrique est utilisé de manière discontinue pour participer à la traction du véhicule. Un alternateur (pouvant être formé par le moteur électrique lui-même) peut être utilisé pour recharger la batterie de traction.
Le véhicule automobile comporte ici une prise de courant permettant de mettre en charge localement la batterie de traction, par exemple sur le réseau électrique d'une habitation ou sur tout autre réseau électrique. Alors, au démarrage du véhicule, la batterie de traction sera ici considérée comme complètement chargée.
Le véhicule automobile comprend par ailleurs une unité électronique de commande (ou ECU pour "Electronic Control Unit"), appelée ici calculateur, permettant notamment de commander les deux chaînes de traction précitées (notamment les puissances développées par le moteur électrique et par le moteur à combustion interne).
Le calculateur comprend un processeur et une unité de mémorisation (appelée ci-après mémoire).
Cette mémoire enregistre des données utilisées dans le cadre du procédé décrit ci-dessous.
Elle enregistre notamment une application informatique, constituée de programmes d'ordinateur comprenant des instructions dont l'exécution par le processeur permet la mise en oeuvre par le calculateur du procédé décrit ci-après.
Elle enregistre également des données issues de mesures réalisées par des capteurs ou issues de calcul. Elle enregistre ici notamment la température extérieure $T_{ext}$ définie comme la température instantanée à l'extérieur du véhicule automobile, et la température interne $T_{batt}$ de la batterie de traction définie comme la température instantanée des composants chimiques de la batterie de traction.

Cette batterie de traction peut être d'un type quelconque.

Elle présente un niveau de charge BSOC, qui sera ici défini comme rapport entre la capacité instantanée (en Ah) de la batterie sur sa capacité nominale. Ce niveau de charge s'exprime en pourcentage.

Dans la suite de cet exposé, une plage d'utilisation de la batterie de traction sera définie comme une plage de niveaux de charge BSOC au sein de laquelle la batterie de traction pourra être utilisée conformément à l'invention.

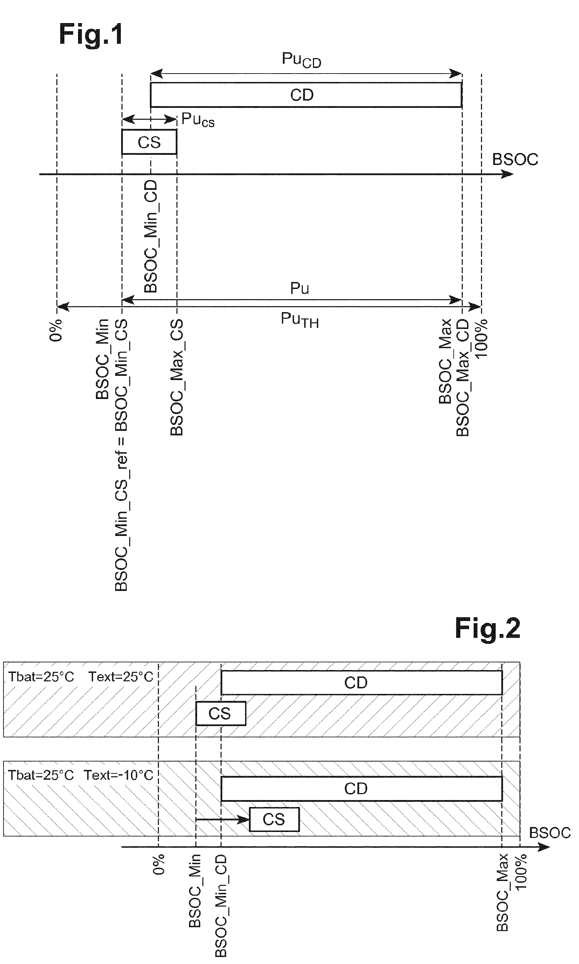

Comme le montre la figure 1, la plage d'utilisation théorique $Pu_{TH}$ de la batterie de traction est comprise entre un niveau de charge égal à 0% et un niveau de charge égal à 100%.

En pratique, la plage d'utilisation globale Pu de la batterie de traction sera comprise entre une borne inférieure BSOC_Min et une borne supérieure BSOC_Max distinctes de 0 et 100%, de manière à garantir la durabilité de la batterie et un niveau de prestations suffisant.

Dans cette plage d'utilisation globale Pu, on distingue deux plages, à savoir une première plage d'utilisation $Pu_{CD}$ de la batterie lorsque le véhicule est utilisé en mode tout-électrique et une seconde plage d'utilisation $Pu_{CS}$ de la batterie lorsque le véhicule est utilisé en mode hybride.

La première plage d'utilisation $Pu_{CD}$ de la batterie de traction (en mode tout-électrique) sera plus vaste que la seconde plage d'utilisation $Pu_{CS}$ de manière à maximiser la durée pendant laquelle le véhicule peut être utilisé sans utiliser le moteur à combustion interne.

La seconde plage d'utilisation $Pu_{CS}$ présente quant à elle une amplitude réduite, ce qui permet d'assurer que la batterie de traction ne se décharge pas trop (afin qu'elle puisse développer une puissance électrique suffisante) et qu'elle ne se recharge pas trop non plus (afin de limiter la consommation en carburant nécessaire pour la recharge de la batterie).

De manière connue, cette batterie de traction est adaptée à délivrer une puissance électrique (appelée ci-après « puissance électrique disponible AP ») qui varie en fonction de l'état de charge BSOC et de la température interne $T_{batt}$ de la batterie de traction.

Ainsi, plus l'état de charge BSOC de la batterie de traction est grand, plus la puissance électrique disponible AP est élevée. De la même manière, plus la température interne $T_{batt}$ de la batterie de traction est élevée, plus la puissance électrique disponible AP est grande.

L'objet de la présente invention est alors de définir la borne inférieure BSOC_Min_CD et la borne supérieure BSOC_Max_CD de la première plage d'utilisation $Pu_{CD}$ de la batterie de traction (en mode tout-électrique), et la borne inférieure BSOC_Min_CS et la borne supérieure BSOC_Max_CS de la seconde plage d'utilisation $Pu_{CS}$ de la batterie de traction (en mode hybride), de telle manière que la batterie de traction puisse assurer de bonnes prestations quelle que soit la température extérieure $T_{ext}$.

La détermination de ces bornes résulte d'un compromis entre différents paramètres liés à la batterie de traction, notamment :

- la puissance électrique disponible AP en sortie de la batterie de traction lorsque le niveau de charge BSOC est faible,
- l'énergie totale disponible, c'est-à-dire la quantité d'énergie que la batterie de traction peut fournir après une recharge complète,
- la durée de vie de la batterie de traction, et
- la puissance électrique disponible en freinage récupératif.

A titre d'exemple, pour augmenter l'énergie totale disponible, on cherche à diminuer les bornes inférieures BSOC_Min_CS, BSOC_Min_CD des plages d'utilisation $Pu_{CD}$, $Pu_{CS}$ de la batterie de traction.

L'inconvénient est que si le véhicule s'arrête et que la température interne $T_{batt}$ de la batterie de traction chute (ce qui est le cas lorsque la température extérieure $T_{ext}$ est basse), il existe un risque qu'au redémarrage, la puissance électrique disponible AP ne soit plus suffisante pour assurer les prestations pour lesquelles la batterie de traction a été conçue (par exemple pour permettre le redémarrage du moteur à combustion interne).

Alors, selon une caractéristique particulièrement avantageuse de l'invention, au moins une des bornes de la seconde plage d'utilisation $Pu_{CS}$ est définie en fonction d'une température de référence $\tau$ qui est relative à la température extérieure $T_{ext}$ au véhicule automobile.

En pratique, le calculateur déterminera la valeur de la borne inférieure BSOC_Min_CS de la seconde plage d'utilisation $Pu_{CS}$ en fonction de la température de référence $\tau$.

Ainsi, si la température extérieure $T_{ext}$ est élevée (par exemple de l'ordre de 25°C), alors, la plage d'utilisation $Pu_{CS}$ de la batterie de traction en mode hybride pourra rester relativement basse sans pénaliser les performances électriques de la batterie (voir partie haute de la figure 2).

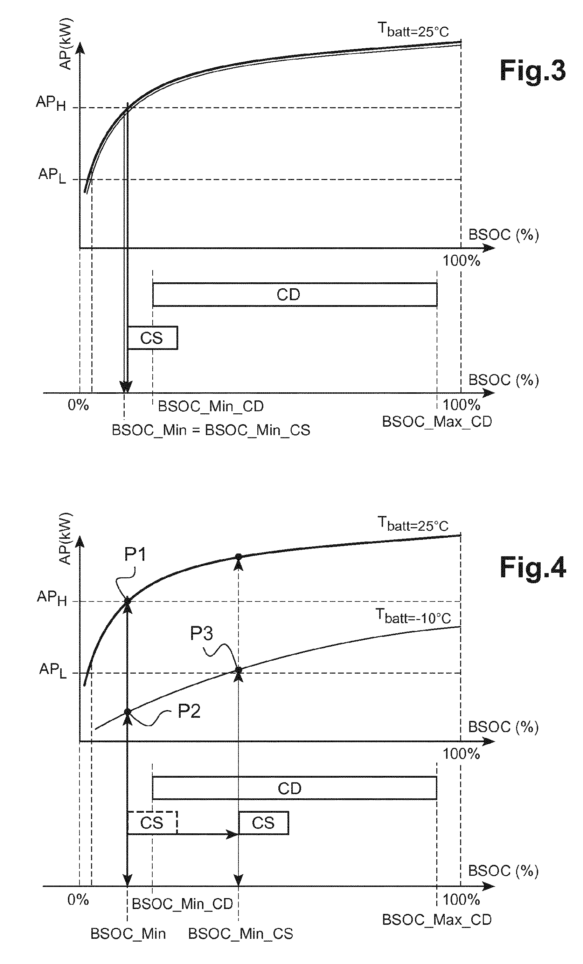

En effet, en cas d'arrêt prolongé du véhicule, la température interne $T_{batt}$ de la batterie de traction, qui est sensiblement égale à la température extérieure $T_{ext}$, reste constante. Par conséquent, comme le montre la figure 3, la puissance électrique disponible AP ne varie pas entre l'arrêt et le redémarrage du véhicule, si bien qu'elle reste supérieure à un premier seuil $AP_H$.

En revanche, si la température extérieure $T_{ext}$ est basse (par exemple de l'ordre de -10°C), alors, la plage d'utilisation $Pu_{CS}$ de la batterie de traction en mode hybride devra être décalée vers le haut afin de préserver les performances électriques de la batterie en cas d'arrêt prolongé du véhicule (voir partie basse de la figure 2).

En effet, en cas d'arrêt prolongé du véhicule, la température interne $T_{batt}$ de la batterie de traction, qui est sensiblement plus élevée que la température extérieure $T_{ext}$, va diminuer. Par conséquent, comme le montre la figure 4, la puissance électrique disponible AP va varier entre l'arrêt (Point P1 sur la figure 4) et le redémarrage du véhicule (Point P2 sur la figure 4). Par conséquent, comme le montre la flèche en trait plein sur la figure 4, si la plage d'utilisation $Pu_{CS}$ de la batterie de traction en mode hybride n'avait pas été modifiée, la puissance électrique disponible AP au redémarrage serait alors inférieure à un second seuil $AP_L$. Grâce à l'invention, puisque la plage d'utilisation $Pu_{CS}$ de la batterie de traction en mode hybride a été modifiée, la puissance électrique disponible AP au redémarrage (point P3 sur le figure 4) est supérieure à ce second seuil $AP_L$.

Ici, les deux seuils $AP_H$, $AP_L$ sont distincts puisque, lorsque la température extérieure $T_{ext}$ est réduite, on considère qu'il est acceptable que la batterie de traction délivre des performances légèrement restreintes.

En variante, ces deux seuils $AP_H$, $AP_L$ pourraient être choisis égaux.

Le procédé de détermination des bornes des plages d'utilisation de la batterie de traction est plus précisément mis en oeuvre en sept étapes principales, de la manière suivante.

Ce procédé est itératif, c'est-à-dire qu'il pourra être répété régulièrement de manière à ajuster au mieux les plages d'utilisation de la batterie en fonction des conditions rencontrées (notamment en fonction des conditions de température).

Au cours d'une première étape, le calculateur acquiert la borne supérieure BSOC_Max de la plage d'utilisation globale Pu de la batterie de traction (voir figure 1).

Cette borne supérieure BSOC_Max est prédéterminée et enregistrée dans la mémoire du calculateur. Elle a été déterminée au cours de la conception du véhicule automobile, en fonction des contraintes de durabilité propres à la batterie de traction.

Sa valeur est donc invariable et indépendante de la température interne $T_{batt}$ de la batterie de traction et de la température extérieure $T_{ext}$.

Elle peut par exemple être fixée égale à 95%.

Au cours d'une seconde étape, le calculateur détermine la borne inférieure BSOC_Min de la plage d'utilisation globale Pu de la batterie de traction.

Cette borne inférieure est déterminée en fonction de la température interne $T_{batt}$ de la batterie de traction, qui est au préalable mesurée par un capteur ou calculée par le calculateur en fonction d'autres paramètres.

La borne inférieure BSOC_Min est déterminée de telle manière que la puissance électrique disponible AP instantanément soit supérieure ou égale au premier seuil $AP_H$, ce que l'on peut écrire :

$$BSOC\_Min(T_{batt}) = \min_{BSOC}\{BSOC \mid AP(BSOC, T_{batt}) \ge AP_H\}, \forall T_{batt}$$

Autrement formulé, la borne inférieure BSOC_Min est calculée de telle manière que la batterie puisse, compte tenu de sa température interne $T_{batt}$, développer une puissance électrique supérieure ou égale au premier seuil de puissance $AP_H$.

Au cours d'une troisième étape, le calculateur détermine la borne supérieure BSOC_Max_CD de la première plage d'utilisation $Pu_{CD}$ de la batterie de traction (en mode tout-électrique).

Ici, afin de maximiser l'énergie disponible lorsque le véhicule est en mode tout-électrique, cette borne supérieure BSOC_Max_CD est choisie égale à la borne supérieure BSOC_Max de la plage d'utilisation globale Pu de la batterie de traction, ce que l'on peut écrire :

$$BSOC\_Max\_CD = BSOC\_Max$$

Au cours d'une quatrième étape, le calculateur détermine une borne inférieure de référence BSOC_Min_CS_ref.

Cette borne inférieure de référence BSOC_Min_CS_ref constituera une référence à partir de laquelle il sera possible de calculer la borne inférieure BSOC_Min_CS de la seconde plage d'utilisation $Pu_{CS}$ de la batterie de traction (en mode hybride), compte tenu de la température extérieure $T_{ext}$.

Plus précisément, la borne inférieure BSOC_Min_CS sera choisie égale à la borne inférieure de référence BSOC_Min_CS_ref lorsqu'il n'y aura pas de risque qu'en cas d'arrêt prolongé du véhicule, la température interne $T_{batt}$

de la batterie de traction baisse.

Elle sera en revanche choisie supérieure à celle-ci dans le cas contraire.

Ici, la borne inférieure de référence BSOC_Min_CS_ref est choisie égale à la borne inférieure BSOC_Min de la plage d'utilisation globale Pu de la batterie de traction, ce que l'on peut écrire :

$$BSOC\_Min\_CS\_ref = BSOC\_Min$$

Cette borne inférieure de référence BSOC_Min_CS_ref n'est donc pas fonction de la température extérieure $T_{ext}$.

Au cours d'une cinquième étape, le calculateur détermine la borne inférieure BSOC_Min_CD de la première plage d'utilisation $Pu_{CD}$ de la batterie de traction (en mode tout-électrique).

Cette borne inférieure BSOC_Min_CD est strictement supérieure à la borne inférieure BSOC_Min de la plage d'utilisation globale Pu de la batterie de traction.

De cette manière, lorsque le niveau de charge BSOC de la batterie de traction passe en-deçà de cette borne inférieure BSOC_Min_CD et que, partant, le véhicule passe en mode hybride, la charge de la batterie reste suffisante pour lui permettre d'assurer les prestations pour lesquelles elle a été conçue.

Le calcul de cette borne inférieure BSOC_Min_CD est ici réalisé en deux opérations successives.

La première opération consiste à déterminer la quantité d'énergie ΔE que l'on souhaite que la batterie puisse développer lorsqu'elle se décharge depuis cette borne inférieure BSOC_Min_CD jusqu'à la borne inférieure BSOC_Min de la plage d'utilisation globale Pu de la batterie de traction.

Cette quantité d'énergie ΔE est fonction des caractéristiques intrinsèques de la batterie de traction. Sa valeur est indépendante de la température interne $T_{batt}$ de la batterie de traction et de la température extérieure $T_{ext}$.

Sa valeur sera choisie en faisant un compromis entre l'autonomie de la batterie en mode tout-électrique et les performances que l'on souhaite garantir.

Ici, sa valeur sera choisie inférieure ou égale à la moitié de la quantité d'énergie Ecs que la batterie est en mesure de développer en mode hybride, ce que l'on peut écrire :

$$\Delta E \leq E_{CS}/2$$

La seconde opération consiste alors à en déduire la valeur de la borne inférieure BSOC_Min_CD.

Cette borne inférieure BSOC_Min_CD est supérieure à la borne inférieure BSOC_Min de la plage d'utilisation globale Pu de la batterie de traction, d'une valeur qui permet d'assurer que l'énergie disponible dans la batterie de traction pour passer de l'une à l'autre de ces bornes est au moins égale à la quantité d'énergie ΔE, ce que l'on peut écrire :

$$BSOC\_Min\_CD(T_{bat}) = \min_{BSOC}\left\{BSOC \middle| AE(T_{batt})_{BSOC\_Min \to BSOC} \geq \Delta E\right\}, \forall T_{batt}$$

Avec $AE(T_{batt})_{BSOC\_Min \to BSOC}$ l'énergie disponible dans la batterie de traction entre le niveau de charge BSOC et la borne inférieure BSOC_Min de la plage d'utilisation globale Pu de la batterie de traction, pour une température interne $T_{batt}$ fixe.

La sixième étape consiste à déterminer la borne inférieure BSOC_Min_CS de la seconde plage d'utilisation $Pu_{CS}$ de la batterie de traction (en mode hybride).

Comme le montrent les figures 3 et 4, cette borne inférieure BSOC_Min_CS est choisie de manière à ce que :

- la puissance électrique disponible AP instantanément en sortie de la batterie de traction soit supérieure au premier seuil $AP_H$, et que
- la puissance électrique disponible AP en sortie de la batterie de traction après un arrêt prolongé et un refroidissement de la batterie de traction à une température de référence τ proche de la température extérieure $T_{ext}$ soit supérieure au second seuil $AP_L$, ce que l'on peut écrire :

$$BSOC\_Min\_CS(T_{bat}, T_{ext}) = \max\left\{ \begin{array}{l} \min_{BSOC}\left\{BSOC\,|\,AP(BSOC, T_{bat}) \geq AP_H\right\}, \\ \min_{BSOC}\left\{BSOC\,|\,AP(BSOC, \tau) \geq AP_L\right\} \end{array} \right\}, \forall T_{bat}$$

La valeur de cette borne inférieure BSOC_Min_CS est donc fonction de la température interne $T_{batt}$ de la batterie de traction, mais également de la température extérieure $T_{ext}$ via la température de référence $\tau$.

Cette température de référence $\tau$ pourra être calculée de différentes manières. On pourra ici en donner trois.

La première manière sera de considérer que cette température de référence $\tau$ est égale à la température extérieure $T_{ext}$. On considérera ainsi le cas le plus défavorable selon lequel après un arrêt prolongé, la température interne $T_{batt}$ baisse jusqu'à atteindre la température extérieure $T_{ext}$.

La seconde manière sera de considérer que cette température de référence $\tau$ est égale à la valeur de la température interne $T_{batt}$ de la batterie de traction, retranchée d'une constante $\Delta T$ (typiquement égale à 20°C). On considérera ainsi qu'après un arrêt prolongé, la température interne $T_{batt}$ d'une batterie baisse en moyenne de 20°C.

La troisième manière sera de considérer que cette température de référence $\tau$ est une fonction de la température interne $T_{batt}$ de la batterie de traction, de la température extérieure $T_{ext}$, d'une constante de temps d'échange thermique $\theta$ de la batterie de traction par convection avec l'extérieur, et d'une durée D au bout de laquelle on veut garantir que la puissance électrique disponible AP est égale au second seuil $AP_L$. Cette relation peut par exemple s'exprimer selon la formule mathématique suivante :

$$\tau(T_{bat}, T_{ext}) = T_{ext} + (T_{bat} - T_{ext}) \cdot e^{-\frac{D}{\Theta}}$$

Selon d'autres variantes, le calcul de la température de référence $\tau$ pourra être réalisé en fonction d'autres paramètres, tels que des données météorologiques ou des informations enregistrées lors de roulages précédents. Ainsi, le calculateur pourra par exemple déterminer que la température de référence est égale à la température extérieure dans le cas où le véhicule roule vers le lieu de travail du conducteur (puisque l'arrêt sera prolongé), et qu'elle est égale à la température interne $T_{batt}$ de la batterie dans le cas où le véhicule roule vers une station essence (puisque l'arrêt sera de courte durée).

La septième et ultime étape de détermination des bornes des plages d'utilisation de la batterie de traction consiste à déterminer la borne supérieure BSOC_Max_CS de la seconde plage d'utilisation $Pu_{CS}$ de la batterie de traction (en mode hybride).

Cette borne supérieure BSOC_Max_CS est déterminée en fonction de la borne inférieure BSOC_Min_CS de la seconde plage d'utilisation $Pu_{CS}$, de telle manière que l'énergie disponible dans la batterie de traction entre ces deux bornes soit au moins égale à la quantité d'énergie Ecs, ce que l'on peut écrire :

$$BSOC\_Max\_CS = \min_{BSOC}\left\{BSOC\,|\,AE(T_{batt})_{BSOC\_Min\_CS \rightarrow BSOC} \geq E_{CS}\right\}, \forall T_{bat}, \forall T_{ext}$$

On peut maintenant décrire, dans la suite de cet exposé, un exemple pratique illustrant la manière selon laquelle le niveau de charge BSOC de la batterie de traction évolue au cours du temps, à 25°C et à -10°C.

Lorsque le véhicule automobile démarre est que sa batterie de traction est chargée, le calculateur détermine une consigne de gestion de la consommation en carburant et en courant électrique, permettant de minimiser la consommation en carburant du véhicule.

Cette consigne de gestion consiste ici à d'abord utiliser le véhicule en mode tout-électrique (entre l'instant to et l'instant $t_1$), puis à ensuite utiliser le véhicule en mode hybride.

Lors de l'utilisation du véhicule en mode tout-électrique, le niveau de charge BSOC est représenté comme décroissant selon une fonction affine. En pratique, cette décroissance se fera selon une courbe de forme différente.

Quoi qu'il en soit, lorsque le niveau de charge BSOC atteint, à l'instant $t_1$, la borne inférieure BSOC_Min_CD de la première plage d'utilisation $Pu_{CD}$ de la batterie de traction (en mode tout-électrique), le calculateur passe automatiquement en mode hybride, de manière que le niveau de charge BSOC de la batterie de traction ne passe jamais en dessous de la borne inférieure BSOC_Min de la plage d'utilisation globale Pu de la batterie de traction.

On constate alors que le niveau de charge BSOC de la batterie de traction va varier entre la borne inférieure BSOC_Min_CS et la borne supérieure BSOC_Max_CS de la seconde plage d'utilisation $Pu_{CS}$ de la batterie de traction.

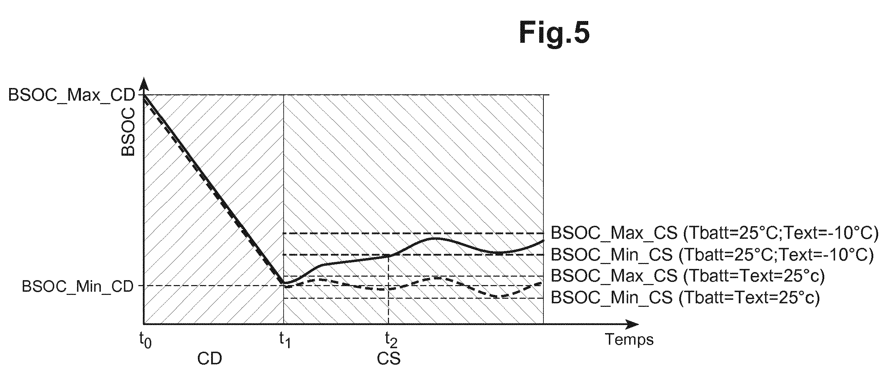

Comme le montre la figure 5, ces deux bornes présenteront des valeurs moins élevées lorsque la température

extérieure $T_{ext}$ est égale à 25°C que lorsqu'elle est égale à -10°C, de manière à assurer que la puissance électrique disponible AP reste toujours au moins supérieure au second seuil $AP_L$.

Ainsi, en cas de longue pause lorsque la température extérieure $T_{ext}$ est égale à 25°C, la température interne $T_{batt}$ de la batterie de traction ne va pas varier sensiblement, si bien que l'on pourra écrire :

$$BSOC\_Min\_CS(T_{bat},T_{ext}) = \max_{BSOC}\left\{\begin{array}{l} \min_{BSOC}\{BSOC|AP(BSOC,T_{bat}) \geq AP_H\}, \\ \min_{BSOC}\{BSOC|AP(BSOC,\tau) \geq AP_L\} \end{array}\right\}, \forall T_{bat} \Leftrightarrow$$

$$BSOC\_Min\_CS(T_{bat},T_{ext}) = \min_{BSOC}\{BSOC|AP(BSOC,T_{bat}) \geq AP_H\} \Leftrightarrow$$

$$BSOC\_Min\_CS(T_{bat},T_{ext}) = BSOC\_Min\_CS\_ref$$

En revanche, en cas de longue pause lorsque la température extérieure $T_{ext}$ est égale à -10°C, la température interne $T_{batt}$ de la batterie de traction va chuter, si bien que l'on pourra écrire :

$$BSOC\_Min\_CS(T_{bat},T_{ext}) = \max_{BSOC}\left\{\begin{array}{l} \min_{BSOC}\{BSOC|AP(BSOC,T_{bat}) \geq AP_H\}, \\ \min_{BSOC}\{BSOC|AP(BSOC,\tau) \geq AP_L\} \end{array}\right\}, \forall T_{bat} \Leftrightarrow$$

$$BSOC\_Min\_CS(T_{bat},T_{ext}) = \min_{BSOC}\{BSOC|AP(BSOC,\tau) \geq AP_L\}$$

Grâce à cette logique, après un arrêt prolongé du véhicule, la puissance électrique disponible AP en sortie de la batterie de traction sera certes inférieure au premier seuil $AP_H$, mais supérieure au second seuil $AP_L$. Dans ce cas, même si le conducteur pourra constater une dégradation des performances du véhicule, cette dégradation aura été prévue de telle sorte qu'elle reste acceptable.

Sur la figure 5, on constate qu'entre les instants $t_1$ et $t_2$, le niveau de charge sera inférieur à la borne inférieure BSOC_Min_CS de la seconde plage d'utilisation $Pu_{CS}$ de la batterie de traction (en mode hybride).

Entre ces deux instants, le calculateur va alors être programmé pour ramener l'état de charge BSOC de la batterie au-dessus de cette borne inférieure BSOC_Min_CS, en utilisant l'alternateur (ou le moteur électrique) pour recharger la batterie de traction.

Le passage de l'état de charge BSOC de la batterie depuis la borne inférieure BSOC_Min_CD jusqu'à la borne inférieure BSOC_Min_CS devra être progressif afin de ne pas engendrer une surconsommation importante de carburant et une réduction des performances du véhicule.

Cette transition pourra être gérée par une loi de gestion d'énergie mémorisée dans la mémoire du calculateur. Cette loi de gestion d'énergie pourra prendre des formes différentes.

Ainsi, dans un premier exemple, cette loi de gestion d'énergie consistera, pour le calculateur, à modifier la consigne de gestion normale de la consommation en carburant et en courant électrique du groupe motopropulseur, de manière à ce que l'alternateur (dont on rappelle qu'il est entraîné par le moteur à combustion interne) prélève une partie de l'énergie mécanique développée par le moteur à combustion interne afin de renvoyer en continu vers la batterie de traction une puissance constante (qui vient donc s'ajouter à la puissance électrique calculée par défaut).

Dans un second exemple, en vertu du principe de minimisation de Pontryagin (D.S. Naibu, Optimal Control Systems. CRC Press LLC, 1st Ed., 2003), le calculateur pourra minimiser la consommation en carburant sous contrainte du respect d'une cible d'état de charge BSOC.

Pour cela, le calculateur va minimiser un Hamiltonien J de la forme :

$$J = \min_u\left\{\dot{m}_c + \lambda \cdot \frac{dBSOC}{dt} + \frac{d[\varepsilon(BSOC)]}{d[BSOC]} \cdot \frac{dBSOC}{dt}\right\}, \text{ avec}$$

- $m_c$ la quantité de carburant consommée,
- $\lambda$ une constante, et
- $\varepsilon$ une fonction de coût qui est minimale lorsque l'état de charge BSOC est situé à égale distance des bornes inférieure BSOC_Min_CS et supérieure BSOC_Max_CS.

Cette fonction de coût $\varepsilon$ pourra être obtenue de diverses manières.

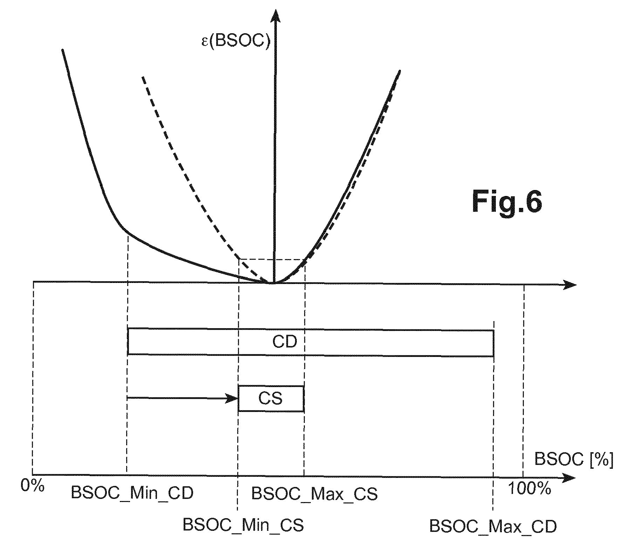

Ainsi, à titre de premier exemple illustré par la courbe en pointillés de la figure 6, cette fonction pourra être définie de la manière suivante :

$$\varepsilon(BSOC) = \alpha \cdot \left( BSOC - \frac{BSOC\_Min\_CS + BSOC\_Max\_CS}{2} \right)^2,$$

avec $\alpha$ une constante

A titre de second exemple (non illustré), cette fonction pourra être définie de la manière suivante :

$$\varepsilon(BSOC) = \begin{cases} \alpha \cdot |BSOC - BSOC\_Min\_CS| \ldots si \ldots BSOC \leq BSOC\_Min\_CS \\ 0 \ldots si \ldots BSOC\_Min\_CS \leq BSOC \leq BSOC\_Max\_CS \\ \alpha \cdot |BSOC - BSOC\_Max\_CS| \ldots si \ldots BSOC\_Max\_CS \leq BSOC \end{cases}$$

Le défaut de ces deux exemples est que lors du passage du mode tout-électrique au mode hybride, si la différence entre les bornes inférieures BSOC_Min_CD et BSOC_Min_CS est trop importante, alors le calculateur va trop favoriser la recharge de la batterie de traction, ce qui générera une grande surconsommation de carburant.

Un troisième exemple, illustré par la courbe en traits plein de la figure 6, va alors permettre de réduire cette surconsommation.

Dans cet exemple, le calculateur sera programmé de telle sorte que la fonction de coût $\varepsilon$ évolue de manière linéaire entre les bornes inférieures BSOC_Min_CD et BSOC_Min_CS, selon une pente prédéterminée. Il sera aussi programmé pour qu'ensuite, cette fonction de coût évolue comme dans l'un ou l'autre des deux exemples précités.

La présente invention n'est nullement limitée au mode de réalisation décrit et représenté, mais l'homme du métier saura y apporter toute variante conforme à son esprit.

On pourrait ainsi prévoir que la borne supérieure BSOC_Max_CS de la seconde plage d'utilisation Pu$_{CS}$ de la batterie de traction (en mode hybride) soit déterminée avant la borne inférieure BSOC_Min_CS de cette plage d'utilisation, en fonction de la température de référence $\tau$. Dans cette variante, la borne inférieure BSOC_Min_CS pourrait ensuite être calculée en soustrayant une valeur prédéterminée à la borne supérieure BSOC_Max_CS.

Dans une autre variante de réalisation de l'invention, la borne inférieure BSOC_Min de la plage d'utilisation globale Pu de la batterie de traction pourrait être calculée en fonction d'un indicateur de vieillissement SOHP (correspondant à l'état de santé de la batterie en termes de puissance électrique). Dans cette variante, il sera ainsi possible d'augmenter petit à petit la borne inférieure BSOC_Min en fonction du vieillissement de la batterie de traction, en vue de s'assurer que la puissance électrique disponible AP reste toujours supérieure aux seuils prédéfinis.

Dans cette variante de réalisation de l'invention, on pourra éventuellement envisager que la borne supérieure BSOC_Max de la plage d'utilisation globale Pu de la batterie de traction soit calculée en fonction également d'un indicateur de vieillissement SOHE (correspondant à l'état de santé de la batterie en termes d'énergie électrique disponible). Dans cette variante, il sera ainsi possible de réduire en début de vie la borne supérieure BSOC_Max (de manière à augmenter en conséquence son espérance de vie), puis d'augmenter ensuite petit à petit cette borne supérieure BSOC_Max de manière à ce que l'énergie totale disponible dans la batterie reste constante à chaque cycle (alors que la borne inférieure BSOC_Min augmente petit à petit).

**Revendications**

1. Procédé de gestion de l'énergie pour un véhicule automobile hybride comportant un moteur électrique alimenté en courant électrique par une batterie de traction, et un moteur à combustion interne alimenté en carburant, incluant les étapes suivantes :

   - définir la borne inférieure (BSOC_Min_CD) et la borne supérieure (BSOC_Max_CD) d'une première plage d'utilisation (Pu$_{CD}$) de la batterie de traction lorsque le véhicule est propulsé en utilisant exclusivement le moteur électrique, et
   - définir la borne inférieure (BSOC_Min_CS) et la borne supérieure (BSOC_Max_CS) d'une seconde plage d'utilisation (Pu$_{CS}$) de la batterie de traction lorsque le véhicule est propulsé en utilisant en combinaison le moteur électrique et le moteur à combustion interne,

   le procédé étant **caractérisé en ce qu'**au moins une des bornes inférieure (BSOC_Min_CS) et supérieure (BSOC_Max_CS) de la seconde plage d'utilisation (Pu$_{CS}$) est définie en fonction d'une température de référence ($\tau$) qui est relative à la température extérieure (T$_{ext}$) au véhicule automobile et **en ce que** la borne inférieure (BSOC_Min_CD) ainsi que la borne supérieure (BSOC_Max_CD) de la première plage d'utilisation (Pu$_{CD}$) de la batterie de traction ne varient pas en fonction de la température extérieure (T$_{ext}$).

**2.** Procédé de gestion selon la revendication précédente, dans lequel la borne inférieure (BSOC_Min_CS) de la seconde plage d'utilisation (Pu$_{CS}$) est déterminée de manière que la batterie de traction puisse instantanément développer une puissance électrique supérieure à un premier seuil (AP$_H$) prédéterminé.

**3.** Procédé de gestion selon la revendication précédente, dans lequel la borne inférieure (BSOC_Min_CS) de la seconde plage d'utilisation (Pu$_{CS}$) est déterminée de manière que la batterie de traction puisse développer une puissance électrique supérieure à un second seuil (AP$_L$) après que sa température interne a chuté, ledit second seuil (AP$_L$) étant strictement inférieur audit premier seuil (AP$_H$).

**4.** Procédé de gestion selon l'une des revendications 1 à 3, dans lequel ladite température de référence ($\tau$) est égale à la température extérieure (T$_{ext}$).

**5.** Procédé de gestion selon l'une des revendications 1 à 3, dans lequel ladite température de référence ($\tau$) est égale à la température interne (T$_{batt}$) de la batterie de traction soustraite d'une constante prédéterminée.

**6.** Procédé de gestion selon l'une des revendications 1 à 3, dans lequel ladite température de référence ($\tau$) est fonction de la température extérieure (T$_{ext}$) et de la température interne (T$_{batt}$) de la batterie de traction.

**7.** Procédé de gestion selon l'une des revendications précédentes, dans lequel, les première et seconde plages d'utilisation (Pu$_{CD}$, Pu$_{CS}$) étant contenues dans une plage d'utilisation globale (Pu), la borne inférieure (BSOC_Min) et/ou la borne supérieure (BSOC_Max) de la plage d'utilisation globale (Pu) est définie en fonction d'un état de vieillissement (SOHP, SOHE) de la batterie de traction.

**8.** Procédé de calcul d'une consigne de gestion de la consommation en carburant et en courant électrique d'un véhicule automobile hybride comportant un moteur électrique alimenté en courant électrique par une batterie de traction, et un moteur à combustion interne alimenté en carburant, **caractérisé en ce qu'**il comprend des étapes consistant à :

- calculer chaque plage d'utilisation (Pu, Pu$_{CD}$, Pu$_{CS}$) de la batterie de traction au moyen d'un procédé de gestion conforme à l'une des revendications précédentes,
- déterminer ladite consigne de gestion de telle manière que le niveau de charge (BSOC) de la batterie de traction reste compris entre la borne inférieure (BSOC_Min_CD) et la borne supérieure (BSOC_Max_CD) de la première plage d'utilisation (Pu$_{CD}$) de la batterie de traction lorsque le véhicule automobile est propulsé en utilisant exclusivement le moteur électrique, et qu'il reste compris entre la borne inférieure (BSOC_Min_CS) et la borne supérieure (BSOC_Max_CS) de la seconde plage d'utilisation (Pu$_{CS}$) de la batterie de traction lorsque le véhicule automobile est propulsé en utilisant en combinaison le moteur électrique et le moteur à combustion interne.

**9.** Procédé de calcul selon la revendication précédente, dans lequel, lorsque le véhicule automobile est propulsé en utilisant en combinaison le moteur électrique et le moteur à combustion interne, ladite consigne de gestion est déterminée de manière à minimiser un vecteur prenant en compte un terme relatif à la consommation en carburant du moteur à combustion interne et un terme relatif à une cible d'état de charge (SOC) de la batterie de traction, cette cible d'état de charge (SOC) étant fonction de la borne inférieure (BSOC_Min_CS) et de la borne supérieure (BSOC_Max_CS) de la seconde plage d'utilisation (Pu$_{CS}$).

# Fig.1

# Fig.2

Fig.3

Fig.4

# Fig.5

BSOC_Max_CD

BSOC

BSOC_Max_CS (Tbatt=25°C;Text=-10°C)

BSOC_Min_CS (Tbatt=25°C;Text=-10°C)

BSOC_Min_CD

BSOC_Max_CS (Tbatt=Text=25°c)

BSOC_Min_CS (Tbatt=Text=25°c)

$t_0$

$t_1$

$t_2$

Temps

CD

CS

EP 3 153 369 A1

14

Fig.6

Europäisches
Patentamt

European
Patent Office

Office européen
des brevets

**RAPPORT DE RECHERCHE EUROPEENNE**

Numéro de la demande

EP 16 30 6285

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 572 951 A1 (TOYOTA MOTOR CO LTD [JP]; DENSO CORP [JP]) 27 mars 2013 (2013-03-27) * figures 14,15 * * alinéas [0005], [0076] * * alinéas [0099] - [0102], [0108], [0111] - [0115] * * alinéas [0118] - [0129] * * alinéas [0140] - [0142] * ----- | 1-9 | INV. B60W20/13 B60W10/06 B60W10/08 B60W10/26 B60L11/18 |
| A | US 2012/200257 A1 (SCHWARZ JONATHAN R [US] ET AL) 9 août 2012 (2012-08-09) * figures 1,3 * * alinéas [0002] - [0004], [0012], [0014] - [0015], [0023] - [0032] * ----- | 1-9 | |
| A | DE 10 2011 004357 A1 (CONTINENTAL AUTOMOTIVE GMBH [DE]) 12 janvier 2012 (2012-01-12) * figures 1,2 * * le document en entier * ----- | 1-9 | |
| A | DE 10 2014 203417 A1 (BOSCH GMBH ROBERT [DE]) 27 août 2015 (2015-08-27) * figure 2 * * alinéas [0003], [0007], [0036] - [0039] * ----- | 1-9 | **DOMAINES TECHNIQUES RECHERCHES (IPC)** B60W B60L |
| A | EP 2 020 724 A1 (TOYOTA MOTOR CO LTD [JP]) 4 février 2009 (2009-02-04) * figure 2 * * le document en entier * ----- | 1-9 | |
| A | WO 2007/048366 A1 (TEMIC AUTO ELECTR MOTORS GMBH [DE]; BIRKE PETER [DE]; MALIK MANFRED [D) 3 mai 2007 (2007-05-03) * figures 2,3 * ----- | 1-9 | |

Le présent rapport a été établi pour toutes les revendications

| Lieu de la recherche | Date d'achèvement de la recherche | Examinateur |
|---|---|---|
| Munich | 2 mars 2017 | Dubreuil, Cédric |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**EP 3 153 369 A1**

## ANNEXE AU RAPPORT DE RECHERCHE EUROPEENNE
## RELATIF A LA DEMANDE DE BREVET EUROPEEN NO.

EP 16 30 6285

02-03-2017

| Document brevet cité au rapport de recherche | | | Date de publication | Membre(s) de la famille de brevet(s) | | | Date de publication |
|---|---|---|---|---|---|---|---|
| EP | 2572951 | A1 | 27-03-2013 | CN | 102905949 | A | 30-01-2013 |
| | | | | EP | 2572951 | A1 | 27-03-2013 |
| | | | | JP | 5730501 | B2 | 10-06-2015 |
| | | | | JP | 2011240863 | A | 01-12-2011 |
| | | | | US | 2013062941 | A1 | 14-03-2013 |
| | | | | WO | 2011145546 | A1 | 24-11-2011 |
| US | 2012200257 | A1 | 09-08-2012 | DE | 102012001820 | A1 | 09-08-2012 |
| | | | | US | 2012200257 | A1 | 09-08-2012 |
| DE | 102011004357 | A1 | 12-01-2012 | AUCUN | | | |
| DE | 102014203417 | A1 | 27-08-2015 | AUCUN | | | |
| EP | 2020724 | A1 | 04-02-2009 | CA | 2651141 | A1 | 29-11-2007 |
| | | | | CN | 101449448 | A | 03-06-2009 |
| | | | | EP | 2020724 | A1 | 04-02-2009 |
| | | | | JP | 4929839 | B2 | 09-05-2012 |
| | | | | JP | 2007311309 | A | 29-11-2007 |
| | | | | KR | 20090016471 | A | 13-02-2009 |
| | | | | RU | 2008150486 | A | 27-06-2010 |
| | | | | US | 2009099800 | A1 | 16-04-2009 |
| | | | | WO | 2007136126 | A1 | 29-11-2007 |
| WO | 2007048366 | A1 | 03-05-2007 | EP | 1941288 | A1 | 09-07-2008 |
| | | | | JP | 2009514504 | A | 02-04-2009 |
| | | | | KR | 20080072012 | A | 05-08-2008 |
| | | | | US | 2008284378 | A1 | 20-11-2008 |
| | | | | WO | 2007048366 | A1 | 03-05-2007 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110166733 A1

**Littérature non-brevet citée dans la description**

- **D.S. NAIBU.** Optimal Control Systems. CRC Press LLC, 2003